# EUROPÄISCHE PATENTSCHRIFT

(11) **EP 2 648 328 B1**
(45) Veröffentlichungstag und Bekanntmachung des Hinweises auf die Patenterteilung: **09.05.2018**
(21) Anmeldenummer: 13154366.2
(22) Anmeldetag: 07.02.2013
(51) Int. Cl.: H02M 7/48, H02M 1/32

(54) **Schutz eines Stromrichters mit Zwischenkreis vor Beschädigungen durch die Gegenspannung der angeschlossenen Synchronmaschine**
Protection of a power converter with link circuit against damages caused by the countervoltage of a synchronous machine
Protection d'un convertisseur de courant avec circuit intermédiaire contre les dommages causés par la contre-tension d'une machine synchrone

(30) Priorität: 03.04.2012 DE 102012102878
(43) Veröffentlichungstag der Anmeldung: 09.10.2013
(73) Patentinhaber: SEMIKRON Elektronik GmbH & Co. KG, 90431 Nürnberg (DE)
(72) Erfinder: Hettrich, Sebastian, 91126 Schwabach (DE); Kraus, Jochen, 90419 Nürnberg (DE); Uhl, Michael, 90475 Nürnberg (DE)

(56) Entgegenhaltungen:
- DE-A1- 10 251 977
- US-A1- 2007 063 661
- US-A1- 2008 304 189

## Beschreibung

Die vorliegende Erfindung liegt auf dem Gebiet der Leistungselektronik und betrifft einen Stromrichter mit einem Spannungszwischenkreis gemäß Anspruch 1 sowie ein Verfahren zum Betreiben eines solchen Stromrichters gemäß Anspruch 11. Bevorzugte Ausführungsformen werden in den abhängigen Ansprüchen definiert.

### Stand der Technik

In modernen Kraftfahrzeugen werden zunehmend elektrische Maschinen zum Antrieb eingesetzt. Im Hinblick auf die erforderliche Antriebskraft müssen sie mit einer im Vergleich zum Bordnetz erheblich höheren Betriebsspannung von beispielsweise 600 bis 900 Volt betrieben werden, die von einer Gleichstromquelle bereitgestellt wird. In der Regel benötigen derartige Maschinen mehrere Wechselstromphasen, die durch einen Stromrichter (z.B. 3-Phasen-Wechselrichter) erzeugt werden. Durch eine Variation von Polarität und Frequenz der erzeugten Wechselspannung können Drehrichtung und Drehzahl bedarfsgerecht an die jeweilige Fahrsituation angepasst werden.

Stromrichter weisen typischer Weise eine Brückenschaltung mit einer Mehrzahl paralleler Halbbrücken zur Erzeugung der Wechselstromphasen auf. Meist ist ein Spannungszwischenkreis mit einer Kondensatorbaugruppe als Ladungsspeicher zur Speisung der Brückenschaltung vorgesehen, wodurch eine Spannungsstützung und -glättung für den Betrieb der elektrischen Maschine erreicht werden kann. In einer Halbbrücke sind zwei Leistungsschalter mit ihren Leistungs- bzw. Laststrompfaden in einer Reihenschaltung angeordnet, wobei meist eine Freilaufdiode antiparallel zu den Leistungsschaltern angeordnet ist. Bekannt ist es, einen solchen Leistungsschalter durch einen oder mehrere parallel verschaltete Leistungstransistoren auszubilden. Konkret umfasst jede Halbbrücke einen ersten Leistungsschalter ("TOP-Schalter" oder "High-Side-Schalter"), der mit seinen Laststromanschlüssen zwischen einem ersten Versorgungspotentialanschluss und einem Lastausgang verschalten ist, sowie einen zweiten Leistungsschalter ("BOT-Schalter" oder "Low-Side-Schalter"), der mit seinen Laststromanschlüssen zwischen dem Lastausgang und einem zweiten Versorgungspotentialanschluss verschalten ist. Der Lastausgang der Halbbrücke kann mit einer elektrischen Last, beispielsweise der Wicklung einer Synchronmaschine, verbunden werden. In einem Stromrichter mit Spannungszwischenkreis ist der erste Versorgungspotentialanschluss an das obere Potential der Zwischenkreisspannung, der zweite Versorgungspotentialanschluss an das untere Potential der Zwischenkreisspannung angeschlossen, so dass der als Mittelabgriff ausgebildete Lastausgang der Halbbrücke wahlweise mit dem oberen oder unteren Potential der Zwischenkreisspannung verbunden werden kann.

Eine Ansteuerung der Brückenschaltung erfolgt durch eine Steuerschaltung, welche typischer Weise in einen primärseitigen Schaltungsteil (Niedervoltseite) und einen sekundärseitigen Schaltungsteil (Hochvoltseite) unterteilt ist, die galvanisch getrennt, jedoch schaltungstechnisch miteinander verbunden sind. Der primärseitige Schaltungsteil der Steuerschaltung ist mit einer übergeordneten Steuereinrichtung verbunden, beispielsweise ein Motorsteuergerät eines Kraftfahrzeugs, während der sekundärseitige Schaltungsteil direkt mit den Leistungsschaltern verbunden ist und diese ansteuert.

Eine Versorgung des primärseitigen Schaltungsteils der Steuerschaltung erfolgt durch eine oder mehrere primärseitige Betriebsspannungen, die typischer Weise im Bereich von 1 bis 24 Volt liegen und in Kraftfahrzeugen in der Regel aus der Bordspannung (z.B. 12 oder 24 Volt) generiert werden. Im Unterschied hierzu liegt der sekundärseitige Schaltungsteil der Steuerschaltung auf Hochspannungspotential, beispielsweise 600 bis 900 Volt. Eine galvanische Trennung der beiden Schaltungsteile kann beispielsweise durch Optokoppler, Impulsübertrager oder mittels integrierter Schaltungstechnik erfolgen, was dem Fachmann an sich bekannt ist. Ein Stromrichter mit Zwischenkreis ist in US 2007/0063661 A1 offenbart.

Für den elektrischen Antrieb von Kraftfahrzeugen werden häufig Synchronmaschinen mit permanentmagnetischer Felderregung eingesetzt, die von einem 3-Phasen-Wechselrichter mit einer Betriebsspannung versorgt werden. Derartige Synchronmaschinen werden auch in einem Drehzahlbereich oberhalb der Nenndrehzahl betrieben, was jedoch eine drehzahlabhängige Anpassung der Feldstromkomponente des in die Wicklungen eingeleiteten Phasenstroms erfordert, um eine schädigende Wirkung der in der Synchronmaschine erzeugten Gegenspannung (Polradspannung), die über die Freilaufdioden in den Zwischenkreis eingespeist wird, zu vermeiden. Zu diesem Zweck wird ein so genannter "Feldschwächstrom" durch den 3-Phasen-Wechselrichter erzeugt. Tritt nun ein Fehler auf, der zum Ausfall der Feldschwächung führt, beispielsweise durch Ausfall der primärseitigen Betriebsspannungen, so liegt die im Feldschwächbetrieb erzeugte Gegenspannung unmittelbar an den Anschlussklemmen an. Da diese Gegenspannung in der Regel höher als die Sperrspannung der Leistungsschalter ist, kann dies zu einer Schädigung der Leistungstransistoren führen. Zudem kann dadurch der Ladungsspeicher des Spannungszwischenkreises beschädigt werden.

In der Patentliteratur ist dieses Problem bereits aufgegriffen worden. So beschreibt die deutsche Offenlegungsschrift DE 10251977 A1 eine Anordnung, bei der die Lastausgänge der Halbbrücken im Fehlerfall durch eine Kurzschlussschaltung kurzgeschlossen werden können. Nachteilig bei dieser Lösung ist die Steuerung der Kurzschlussschaltung durch die Steuerschaltung der Brückenschaltung, so dass bei einem Ausfall der Steuerschaltung der Brückenschaltung ein Kurzschließen der Lastausgänge nicht mehr gewährleistet ist.

Demgegenüber besteht die Aufgabe der vorliegenden Erfindung darin, herkömmliche Stromrichter mit Spannungszwischenkreis so weiterzubilden, dass bei einer Speisung von im Feldschwächbetrieb laufenden Synchronmaschinen mit permanentmagnetischer Felderregung bei einem Ausfall der primärseitigen Betriebsspannungen eine Schädigung des Stromrichters durch die in der Synchronmaschine erzeugte Gegenspannung zuverlässig und sicher vermieden wird. Diese und weitere Aufgaben werden nach dem Vorschlag der Erfindung durch einen Stromrichter mit Spannungszwischenkreis, sowie durch ein Verfahren zum Betreiben eines solchen Stromrichters mit den Merkmalen der nebengeordneten Patentansprüche gelöst. Vorteilhafte Ausgestaltungen der Erfindung sind durch die Merkmale der Unteransprüche angegeben.

Der Ausdruck "Stromrichter", wie hier verwendet, bezieht sich auf an sich bekannte Vorrichtungen zur Wandlung von elektrischer Energie. Stromrichter in diesem Sinne sind insbesondere mehrphasige Gleichstrom/Wechselstrom-Wandler (DC/AC-Wandler) bzw. Wechselrichter.

Der erfindungsgemäße Stromrichter umfasst einen Spannungszwischenkreis zum Bereitstellen einer Zwischenkreisspannung (Gleichspannung), an den eine Mehrzahl paralleler Halbbrücken mit TOP- und BOT-Schaltern angeschlossen ist. Wie üblich sind in einer Halbbrücke zwei Leistungsschalter mit ihren Laststrompfaden in einer Reihenschaltung angeordnet, wobei ein erster Leistungsschalter bzw. TOP-Schalter mit seinem Laststromeingang an eine erste Zwischenkreisleitung für ein oberes Potential (DC+) und ein zweiter Leistungsschalter bzw. BOT-Schalter mit seinem Laststromausgang an eine zweite Zwischenkreisleitung für ein unteres Potential (DC-) der Zwischenkreisspannung angeschlossen ist. Ein Mittelabgriff zwischen TOP- und BOT-Schalter bildet einen Lastausgang der Halbbrücke zur Verbindung der erzeugten Wechselstromphase mit einer elektrischen Last. Die Leistungsschalter sind typischer Weise zum Leiten von elektrischen Strömen von mehreren hundert Ampere und Sperren von Spannungen bis ca. 1000 Volt ausgelegt. In der Praxis werden hierfür meist Bipolartransistoren mit isolierter Gate-Elektrode (IBGT) mit einer Kollektor-Elektrode als Laststromeingang, einer Emitter-Elektrode als Laststromausgang und einer Gate-Elektrode als Steuereingang, oder Feldeffekttransistoren (FET), insbesondere Metalloxid-Feldeffekttransistoren (MOSFET), mit einer Drain-Elektrode als Laststromeingang, einer Source-Elektrode als Laststromausgang und einer Gate-Elektrode als Steuereingang eingesetzt.

Der erfindungsgemäße Stromrichter umfasst weiterhin eine Steuerschaltung zur Ansteuerung der Leistungsschalter, welche in einen primärseitigen Schaltungsteil und einen sekundärseitigen Schaltungsteil unterteilt ist, wobei der primärseitige Schaltungsteil (Niedervoltseite) und der sekundärseitige Schaltungsteil (Hochvoltseite) durch eine galvanisch trennende Übertragungseinrichtung galvanisch getrennt, jedoch schaltungstechnisch miteinander verbunden sind.

Der primärseitige Schaltungsteil umfasst eine primärseitige Spannungsversorgungseinrichtung zur Erzeugung von einer oder typischer Weise mehreren primärseitigen Betriebsspannungen (z.B. Logikspannungen) zur Versorgung des primärseitigen Schaltungsteils. In Kraftfahrzeugen wird die primärseitige Spannungsversorgung typischer Weise von der Bordspannung (z.B. 12 oder 24 Volt) als Eingangsspannung gespeist. Die aus der Eingangsspannung generierten primärseitigen Betriebsspannungen sind typischer Weise kleiner als die Eingangsspannung, jedoch kann auch die Eingangsspannung selbst als primärseitige Betriebsspannung vorgesehen sein. Die primärseitigen Betriebsspannungen liegen typischer Weise im Bereich von 1 bis 24 Volt.

Der primärseitige Schaltungsteil umfasst weiterhin ein Prüfglied, welches dazu ausgebildet ist, das Vorliegen vorgegebener bzw. vorgebbarer Sollwerte der primärseitigen Betriebsspannungen zu prüfen und auf Basis dieser Prüfung (Prüfungsergebnis) ein Fehlersignal auszugeben. Das Fehlersignal umfasst zwei Signal- bzw. Logikpegel, d.h. einen hohen Logikpegel (High) und einen niedrigen Logikpegel (Low), wobei das Fehlersignal beispielsweise einen hohen Logikpegel hat, wenn die primärseitigen Betriebsspannungen ihre Sollwerte aufweisen, oder einen niedrigen Logikpegel hat, wenn wenigstens eine primärseitige Betriebsspannung vom Sollwert abweicht.

Der sekundärseitige Schaltungsteil umfasst eine durch TOP-Steuersignale steuerbare TOP-Treiberschaltung zur Erzeugung von Steuerspannungen zum Schalten der TOP-Schalter und eine durch BOT-Steuersignale steuerbare BOT-Treiberschaltung zur Erzeugung von Steuerspannungen zum Schalten der BOT-Schalter.

Der sekundärseitige Schaltungsteil umfasst weiterhin eine Sicherheits- bzw. Zusatzschaltung mit einem an die BOT-Treiberschaltung angeschlossenen, programmierbaren (z.B. Mikroprozessor-basierten) Steuerlogikbaustein, welcher dazu ausgebildet ist, ein BOT-Treibersignal auf Basis des Fehlersignals als Ausgangssignal an die BOT-Treiberschaltung abzugeben, wobei durch das BOT-Treibersignal alle BOT-Schalter gleichzeitig geschlossen bzw. in Einschaltzustand gebracht werden, um die Lastausgänge der Halbbrücken kurzzuschließen, falls wenigstens eine primärseitige Betriebsspannung vom Sollwert abweicht. Der Steuerlogikbaustein ist mit dem Prüfglied so gekoppelt, dass dem Steuerlogikbaustein das Fehlersignal als Eingangssignal anliegt.

Wie hier und im Weiteren verwendet, bezieht sich der Ausdruck "Einschalten" im Zusammenhang mit einem Leistungsschalter auf das Schalten des Leistungsschalters in seinen Durchlasszustand, in dem der Leistungs- bzw. Laststrompfad elektrisch leitend ist. Der Ausdruck "Ausschalten" bezieht sich auf das Schalten des Leistungsschalters in seinen Sperrzustand, in dem der Leistungs- bzw. Laststrompfad elektrisch isolierend ist.

Der sekundärseitige Schaltungsteil umfasst weiterhin eine sekundärseitige Spannungsversorgungseinrichtung zur Erzeugung wenigstens einer sekundärseitigen Betriebsspannung zur Versorgung der BOT-Treiberschaltung und der Zusatzschaltung, insbesondere den Steuerlogikbaustein. Die sekundärseitige Spannungsversorgungseinrichtung ist mit wenigstens einer primärseitigen Betriebsspannung gekoppelt, so dass bei einem Ausfall wenigstens einer primärseitigen Betriebsspannung in der Regel auch die wenigstens eine sekundärseitige Betriebsspannung ausfällt.

Der sekundärseitige Schaltungsteil umfasst weiterhin einen Gleichstrom/Gleichstrom-Wandler (DC/DC-Wandler) zur Umwandlung der Zwischenkreisspannung in eine sekundärseitige Ersatzspannung zur Versorgung der BOT-Treiberschaltung und der Zusatzschaltung, insbesondere den Steuerlogikbaustein, bei Ausfall der sekundärseitigen Betriebsspannung. Der DC/DC-Wandler ist zu diesem Zweck mit der BOT-Treiberschaltung und der Zusatzschaltung elektrisch verbunden. Dies kann beispielsweise dadurch realisiert sein, dass zwei Spannungsausgänge des DC/DC-Wandlers zur Bereitstellung der Ersatzspannung mit zwei Spannungsausgängen der sekundärseitigen Spannungsversorgungseinrichtung zur Bereitstellung der sekundärseitigen Betriebsspannung elektrisch verbunden sind. Die Ersatzspannung wird vorzugsweise gleichzeitig mit der sekundären Betriebsspannung bereitgestellt, so dass sie sofort zur Verfügung steht, falls die sekundäre Betriebsspannung ausfällt.

In dem erfindungsgemäßen Stromrichter erfolgt somit im Fehlerfall bei Ausfall von einer oder mehreren primärseitigen Betriebsspannungen, was in der Regel auch den Ausfall der sekundärseitigen Betriebsspannung zur Folge hat, eine ersatzweise Versorgung der BOT-Treiberschaltung und der Zusatzschaltung, insbesondere Steuerlogikbaustein, durch die aus der Zwischenkreisspannung erzeugte Ersatzspannung. Zudem werden alle BOT-Schalter gleichzeitig eingeschaltet, so dass die Lastausgänge der Halbbrücken kurzgeschlossen sind. Bei der Speisung einer im Feldschwächbetrieb laufenden Synchronmaschine mit permanentmagnetischer Felderregung kann somit im Fehlerfall die in der Synchronmaschine erzeugte elektrische Energie zuverlässig und sicher dissipiert werden. Eine übermäßige Aufladung des Ladungsspeichers des Spannungszwischenkreises, welche mit einer Zerstörung des Ladungsspeichers einher gehen kann, wird vermieden. Ebenso wird eine Beaufschlagung der Leistungsschalter mit einer die Sperrspannung übersteigenden Gegenspannung, die gleichermaßen zur Zerstörung der Leistungsschalter führen kann, vermieden. Der erfindungsgemäße Stromrichter und die Synchronmaschine können somit im Fehlerfall, bei dem zumindest eine primärseitige Betriebsspannung ausgefallen ist, in einen sicheren Betriebszustand überführt werden.

Bei einer vorteilhaften Ausgestaltung des erfindungsgemäßen Stromrichters ist der Gleichstrom/Gleichstrom-Wandler dazu ausgebildet, eine Ersatzspannung zu erzeugen, die kleiner ist als die sekundärseitige Betriebsspannung. Durch diese Maßnahme kann in einfacher Weise erreicht werden, dass für den Fall, dass die beiden Spannungsausgänge des DC/DC-Wandlers zur Bereitstellung der Ersatzspannung mit den beiden Spannungsausgängen der sekundärseitigen Spannungsversorgungseinrichtung zur Bereitstellung der sekundärseitigen Betriebsspannung elektrisch verbunden sind, nur die sekundäre Betriebsspannung zur Speisung der BOT-Treiberschaltung und der Zusatzschaltung dient. Die Ersatzspannung muss jedoch hinreichend groß sein, um eine Umladung der BOT-Schalter beim Einschaltvorgang zu ermöglichen.

Bei einer weiteren vorteilhaften Ausgestaltung des erfindungsgemäßen Stromrichters umfasst der primärseitige Schaltungsteil einen an das Prüfglied datentechnisch angeschlossenen, programmierbaren (z.B. Mikroprozessor-basierten) Sicherheitslogikbaustein zur Weiterleitung der TOP-Steuersignale und BOT-Steuersignale an die TOP- bzw. BOT-Treiberschaltung. Das vom Prüfglied erzeugte Fehlersignal liegt dem Sicherheitslogikbaustein als Eingangssignal an. Der Sicherheitslogikbaustein ist dazu ausgebildet, eine Weiterleitung der TOP- und BOT-Steuersignale auf Basis des Fehlersignals zu blockieren, falls wenigstens eine primärseitige Betriebsspannung vom Sollwert abweicht. Beispielsweise werden bei Anliegen eines Fehlersignals mit einem hohen Logikpegel (fehlerfreier Zustand der primärseitigen Betriebsspannungen) die TOP- und BOT-Steuersignale ungehindert an die TOP- bzw. BOT-Treiberschaltung weitergeleitet, während bei Anliegen eines Fehlersignals mit einem niedrigen Logikpegel (wenigstens eine primärseitige Betriebsspannung weicht vom Sollwert ab) eine Weiterleitung der TOP- und BOT-Steuersignale durch den Sicherheitslogikbaustein blockiert wird. Durch diese Maßnahme kann in besonders vorteilhafter Weise erreicht, dass im Fehlerfall ein unbeabsichtigtes Ein- oder Ausschalten der TOP-Schalter und/oder BOT-Schalter durch die TOP- und BOT-Steuersignale vermieden wird. Wie üblich gehen die TOP-Schalter bei fehlender Steuerspannung in den Sperrzustand über, so dass durch diese Maßnahme insbesondere ein Kurzschluss im Spannungszwischenkreis vermieden werden kann. Zudem dient nur das in definierter Weise erzeugte sekundärseitige BOT-Treibersignal zur Steuerung der BOT-Schalter. Die Betriebssicherheit des Stromrichters kann dadurch noch weiter verbessert werden.

Bei einer weiteren vorteilhaften Ausgestaltung des erfindungsgemäßen Stromrichters umfasst das Prüfglied für jede primärseitige Betriebsspannung einen Fensterkomparator, durch den geprüft werden kann, ob die primärseitige Betriebsspannung innerhalb eines vorgebbaren Sollwertbereichs liegt. Durch diese Maßnahme ist das Prüfglied in technisch besonders einfacher Weise realisierbar.

Bei einer weiteren vorteilhaften Ausgestaltung des erfindungsgemäßen Stromrichters sind die Spannungsausgänge des DC/DC-Wandlers mit den Spannungsausgängen der sekundärseitigen Spannungsversorgungseinrichtung unter Zwischenschaltung einer Diode elektrisch verbunden. Hierbei ist die Diode so angeordnet, dass ein Stromfluss in Richtung zum DC/DC-Wandler blockiert wird, so dass in vorteilhafter Weise lediglich Strom vom DC/DC-Wandler zu den zu versorgenden Logikbauteilen fließen kann.

Bei einer weiteren vorteilhaften Ausgestaltung des erfindungsgemäßen Stromrichters umfasst die BOT-Treiberschaltung für jeden BOT-Schalter ein ODER-Gatter, das zur Steuerung einer Endstufe zur Erzeugung einer Steuerspannung für den BOT-Schalter dient. Dem ODER-Gatter liegen die BOT-Steuersignale als erstes Eingangssignal und das BOT-Treibersignal als zweites Eingangssignal an. Durch diese Maßnahme kann in besonders einfacher Weise eine wahlweise Steuerung der Endstufen durch die BOT-Steuersignale und das BOT-Treibersignal erreicht werden.

Bei einer weiteren vorteilhaften Ausgestaltung des erfindungsgemäßen Stromrichters ist der Steuerlogikbaustein mit einem an die Ersatzspannung angeschlossenen Analog/Digital-Wandler verbunden, wobei ein auf der Ersatzspannung basierendes Ausgangssignal des Analog/Digital-Wandlers dem Steuerlogikbaustein anliegt. Diese Maßnahme ermöglicht in vorteilhafter Weise eine Überprüfung der Ersatzspannung durch den Steuerlogikbaustein, wobei ein Einschalten der BOT-Schalter durch das BOT-Treibersignal verhindert werden kann, falls eine geeignete Ersatzspannung nicht vorliegt. Beispielsweise wird ein BOT-Treibersignal mit einem die BOT-Schalter nicht einschaltenden Logikpegel (z.B. niedriger Logikpegel) ausgegeben, falls die Ersatzspannung einen vorgegebenen bzw. vorgebbaren Spannungswert unterschreitet.

Bei einer weiteren vorteilhaften Ausgestaltung des erfindungsgemäßen Stromrichters ist der Steuerlogikbaustein so eingerichtet, dass ein Einschalten der BOT-Schalter erst nach Ablauf einer vorgebbaren Verzögerungszeit nach Ausschalten der TOP-Schalter (beispielsweise durch Blockieren der TOP-Steuersignale) erfolgt. Durch diese Maßnahme kann ein unbeabsichtigtes Kurzschließen des Spannungszwischenkreises durch Einschalten aller Leistungsschalter zuverlässig und sicher vermieden werden.

Bei einer weiteren vorteilhaften Ausgestaltung des erfindungsgemäßen Stromrichters ist der Steuerlogikbaustein so eingerichtet, dass ein Einschalten der BOT-Schalter durch das BOT-Treibersignal nur oberhalb eines vorgebbaren oberen Grenzwerts für die Zwischenkreisspannung erfolgt. Durch diese Maßnahme kann in vorteilhafter Weise erreicht werden, dass bei einer unkritischen Zwischenkreisspannung, bei welcher eine Schädigung des Stromrichters nicht zu befürchten ist, ein Einschalten aller BOT-Schalter durch das BOT-Treibersignal vermieden wird. Von Vorteil ist es, wenn der Steuerlogikbaustein zusätzlich oder alternativ so eingerichtet ist, dass die durch das BOT-Treibersignal eingeschalteten BOT-Schalter unterhalb eines vorgebbaren unteren Grenzwerts für die Zwischenkreisspannung durch das BOT-Treibersignal ausgeschaltet werden, so dass der Kurzschluss der Lastausgänge aufgehoben wird. Durch diese Maßnahme kann in vorteilhafter Weise erreicht werden, dass bei einer Zwischenkreisspannung, bei welcher die Generierung einer ausreichend hohen Ersatzspannung zum Einschalten der BOT-Schalter nicht mehr gewährleistet ist, der Kurzschluss der BOT-Schalter aufgehoben wird, um einen gegebenenfalls undefinierten Betriebszustand des Stromrichters zu vermeiden.

Die Erfindung erstreckt sich weiterhin auf eine Synchronmaschine mit permanentmagnetischer Felderregung, welche einen wie oben beschriebenen Stromrichter zur Versorgung mit einer mehrphasigen Betriebsspannung umfasst.

Des Weiteren erstreckt sich die Erfindung auf ein Kraftfahrzeug mit einem Elektro- oder Hybridantrieb, das mit einer solchen Synchronmaschine als Antriebsmaschine ausgerüstet ist.

Ferner erstreckt sich die Erfindung auf ein Verfahren zum Betreiben eines Stromrichters. Der Stromrichter umfasst einen Spannungszwischenkreis zum Bereitstellen einer Zwischenkreisspannung, an den eine Mehrzahl paralleler Halbbrücken mit TOP- und BOT-Schaltern angeschlossen ist, sowie eine Steuerschaltung für die Leistungsschalter, welche in einen primärseitigen Schaltungsteil und einen sekundärseitigen Schaltungsteil unterteilt ist, wobei der sekundärseitige Schaltungsteil eine TOP-Treiberschaltung zur Steuerung der TOP-Schalter und eine BOT-Treiberschaltung zur Steuerung der BOT-Schalter aufweist. Der Stromrichter kann insbesondere wie erfindungsgemäß beschrieben ausgebildet sein.

Das Verfahren umfasst die folgenden Schritte: Erzeugen von einer oder mehreren primärseitigen Betriebsspannungen zur Spannungsversorgung des primärseitigen Schaltungsteils; Prüfen des Vorliegens vorbestimmbarer Sollwerte der primärseitigen Betriebsspannungen und Erzeugen eines Fehlersignals; Erzeugen eines BOT-Treibersignals auf Basis des Fehlersignals durch eine sekundärseitige Zusatzschaltung und Einschalten aller BOT-Schalter durch das BOT-Treibersignal, falls wenigstens eine primärseitige Betriebsspannung vom Sollwert abweicht; Erzeugen wenigstens einer sekundärseitigen Betriebsspannung zur Versorgung der BOT-Treiberschaltung und Zusatzschaltung; Umwandeln der Zwischenkreisspannung in eine Ersatzspannung zur ersatzweisen Spannungsversorgung der BOT-Treiberschaltung und Zusatzschaltung bei Ausfall der sekundärseitigen Betriebsspannung.

Bei einer vorteilhaften Ausgestaltung des erfindungsgemäßen Verfahrens wird eine Ersatzspannung erzeugt, die kleiner ist als die sekundärseitige Betriebsspannung.

Bei einer weiteren vorteilhaften Ausgestaltung des erfindungsgemäßen Verfahrens wird eine Weiterleitung von TOP-Steuersignalen zur TOP-Treiberschaltung und von BOT-Steuer-signalen zur BOT-Treiberschaltung blockiert, falls wenigstens eine primärseitige Betriebsspannung vom Sollwert abweicht.

Bei einer weiteren vorteilhaften Ausgestaltung des erfindungsgemäßen Verfahrens werden die BOT-Schalter erst nach Ablauf einer vorgebbaren Verzögerungszeit nach Ausschalten der TOP-Schalter eingeschaltet.

Bei einer vorteilhaften Ausgestaltung des Verfahrens werden die BOT-Schalter nur oberhalb eines vorgebbaren oberen Grenzwerts für die Zwischenspannung des Spannungszwischenkreises eingeschaltet und/oder die eingeschalteten BOT-Schalter werden unterhalb eines vorgebbaren unteren Grenzwerts für die Zwischenspannung des Spannungszwischenkreises durch das BOT-Treibersignal ausgeschaltet.

Die mit dem erfindungsgemäßen Verfahren und deren Ausgestaltungen erreichten Vorteile wurden bereits im Zusammenhang mit dem erfindungsgemäßen Stromrichter beschrieben, so dass zur Vermeidung von Wiederholungen auf die dortigen Ausführungen verwiesen wird.

Es versteht sich, dass die verschiedenen Ausgestaltungen der Erfindung einzeln oder in beliebigen Kombinationen realisiert sein können, um Verbesserungen eines herkömmlichen Stromrichters mit Spannungszwischenkreis zu erreichen. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

### Ausführungsbeispiel

Die Erfindung wird nun anhand eines Ausführungsbeispiels näher erläutert, wobei Bezug auf die beigefügten Zeichnungen genommen wird. Es zeigen:
- Fig. 1: eine schematische Darstellung des Aufbaus eines erfindungsgemäßen 3-Phasen-Wechselrichters;
- Fig. 2: eine schematische Darstellung des sekundären Schaltungsteils der Steuerschaltung des 3-Phasen-Wechselrichters von Fig. 1.

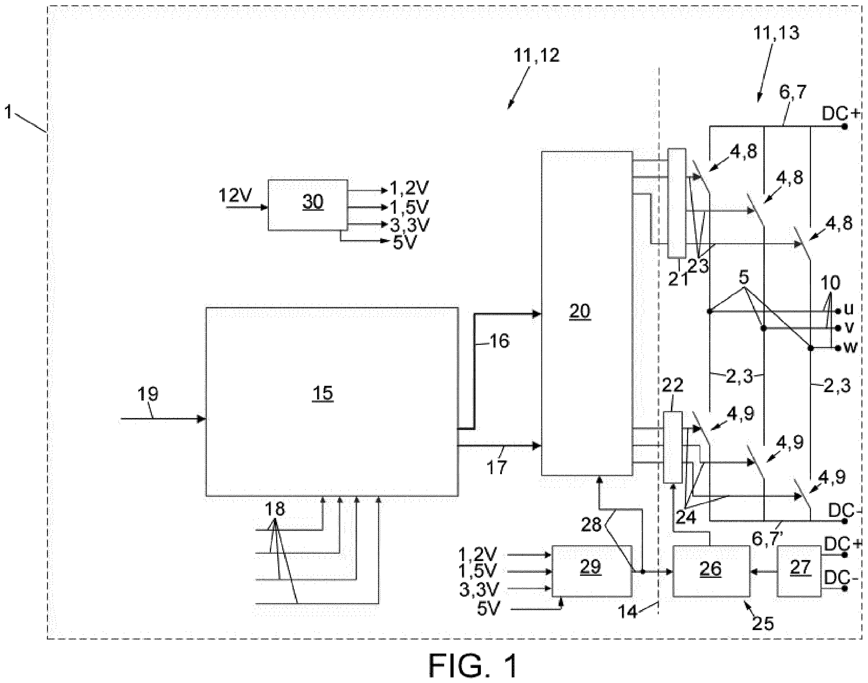

Sei zunächst Fig. 1 betrachtet, worin anhand einer schematischen Darstellung der Aufbau eines Ausführungsbeispiels eines insgesamt mit der Bezugszahl 1 bezeichneten, erfindungsgemäßen 3-Phasen-Wechselrichters veranschaulicht ist. Der 3-Phasen-Wechselrichter 1 dient zur Wandlung einer Gleichspannung in drei Wechselstromphasen zur Speisung einer elektrischen Last, hier beispielsweise eine permanenterregte Synchronmaschine eines Kraftfahrzeugs mit Elektro- oder Hybridantrieb, was in Fig. 1 nicht näher dargestellt ist.

Der 3-Phasen-Wechselrichter 1 umfasst eine Brückenschaltung 2 mit drei parallelen Halbbrücken 3, die jeweils zur Erzeugung einer Wechselstromphase dienen. Jede Halbbrücke 3 verfügt in an sich bekannter Weise über ein Schalterpaar aus zwei mit ihren Laststrompfaden in Reihe geschalteten Leistungsschaltern 4, die als Leistungstransistoren, z.B. bipolare Leistungstransistoren mit isolierter Gate-Elektrode (IGBT) oder Metalloxid-Feldeffekttransistoren (MOSFET), ausgebildet sind. Jedem Leistungsschalter 4 ist eine Freilaufdiode mit entgegen gesetzter Durchlassrichtung parallel geschaltet, was in Fig. 1 nicht dargestellt ist. Jeder Leistungsschalter 4 kann durch einen oder mehrere parallel verschaltete Leistungstransistoren realisiert sein.

Der Brückenschaltung 2 liegt die Gleichspannung eines Spannungszwischenkreises 6 an, zu welchem Zweck die Halbrücken 3 jeweils mit zwei Zwischenkreisleitungen 7, 7' elektrisch verbunden sind. Der Spannungszwischenkreis 6 enthält eine in Fig. 1 nicht dargestellte Kondensatorbaugruppe zur Ladungsspeicherung, die an die Zwischenkreisleitungen 7, 7' so angeschlossen ist, dass eine erste Zwischenkreisleitung 7 ein oberes bzw. höheres Potential (DC+) und eine zweite Zwischenkreisleitung 7' ein als Bezugspotential dienendes, unteres bzw. niedrigeres Potential (DC-) aufweist. Aus der Differenz der beiden Potentiale (DC+, DC-) ergibt sich die Zwischenkreisspannung, welche von den Halbbrücken 3 zu den Wechselstromphasen umgesetzt wird.

Jede Halbbrücke 3 umfasst einen TOP-Schalter 8, der mit seinen Laststromanschlüssen zwischen einem nicht näher bezeichneten Verbindungspunkt mit der ersten Zwischenkreisleitung 7 und einem als Mittelabgriff ausgebildeten Lastausgang 10 verschalten ist, sowie einen BOT-Schalter 9, der mit seinen Laststromanschlüssen zwischen dem Lastausgang 10 und einem nicht näher bezeichneten Verbindungspunkt mit der zweiten Zwischenkreisleitung 7' verschalten ist. Zu diesem Zweck ist der Eingangsanschluss (Kollektoranschluss bei einem IBGT bzw. Drain-Anschluss bei einem MOSFET) des Leistungspfads des TOP-Schalters 8 an die erste Zwischenkreisleitung 7 und der Ausgangsanschluss (Emitteranschluss bei einem IGBT bzw. Source-Anschluss bei einem MOSFET) des Leistungspfads des BOT-Schalters 9 an die zweite Zwischenkreisleitung 7' angeschlossen, so dass der Lastausgang 10 der Halbbrücke 3 wahlweise mit dem oberen Potential (DC+) oder dem unteren Potential (DC-) des Spannungszwischenkreises 6 verbunden werden kann.

Wie in Fig. 1 gezeigt, ist der Lastausgang 10 einer Halbbrücke 3 mit einem Verbindungspunkt 5 zwischen zwei in Reihe geschalteten Leistungsschaltern 4 einer selben Halbbrücke 3 elektrisch verbunden. An den Lastausgängen 10 der drei Halbbrücken 3 können Wechselstromphasen erzeugt werden, hier in üblicher Terminologie mit u, v, w bezeichnet. Die Wechselstromphasen können mit einer elektrischen Last verbunden werden, hier beispielsweise mit den Wicklungssträngen (nicht gezeigt) der Synchronmaschine. Zur Steuerung von Drehrichtung und Drehzahl der Synchronmaschine können die Wicklungsstränge jeweils mit einem Potential vorbestimmter Polarität und Größe für eine bestimmte Zeitdauer beaufschlagt werden.

Um eine für den Betrieb des Kraftfahrzeugs ausreichende Antriebsleistung zu erzeugen, muss die Zwischenkreisspannung hinreichend groß sein. Beispielsweise liegt die Zwischenkreisspannung im Bereich von 600-900 Volt. Die Kapazität der Kondensatorbaugruppe beträgt beispielsweise 1000 µF. Die Kondensatorbaugruppe kann durch eine an die beiden Zwischenkreisleitungen 7, 7' angeschlossene Gleichstromquelle (nicht gezeigt), beispielsweise ein Akkumulator oder eine Brennstoffzelle, elektrisch geladen werden. Wenn die Gleichstromquelle gleichzeitig als Gleichstromsenke ausgebildet ist (Akkumulator), kann eine Ladung auch bei einem Bremsvorgang des Kraftfahrzeugs erfolgen, wobei die Synchronmaschine als Generator wirkt und die erzeugte 3-Phasen-Wechselspannung durch die Brückenschaltung 2 in eine Gleichspannung umgewandelt wird. Beispielsweise ist der Akkumulator als Nickel-Metallhydrid-Akkumulator mit einer Betriebsspannung im Bereich von 100 bis 600 Volt ausgeführt.

Um die Wechselstromphasen u, v, w an den Lastausgängen 10 zu erzeugen, müssen die Leistungsschalter 4 der Brückenschaltung 2 von einer Steuerschaltung 11 des 3-Phasen-Wechselrichters 1 entsprechend angesteuert werden. Die Steuerschaltung 11 ist in üblicher Weise in einen primärseitigen Schaltungsteil 12 und einen sekundärseitigen Schaltungsteil 13 unterteilt, welche galvanisch voneinander getrennt, jedoch schaltungstechnisch miteinander verbunden sind. In Fig. 1 ist die galvanische Trennung der beiden Schaltungsteile 12, 13 durch eine gestrichelte Trennlinie 14 schematisch angedeutet. Die galvanische Trennung der beiden Schaltungsteile 12, 13 erfolgt hier beispielsweise durch Optokoppler, wobei aber auch jede andere hierfür geeignete Technik eingesetzt werden kann.

Der primärseitige Schaltungsteil 12 der Steuerschaltung 11 umfasst eine programmierbare Steuerlogikeinrichtung 15, welche auf Basis eines Ansteuersignals 19 einer übergeordneten Steuereinrichtung (nicht gezeigt), beispielsweise ein Motorsteuergerät eines Kraftfahrzeugs, erste bzw. TOP-Steuersignale 16 zur Steuerung der TOP-Schalter 8 und zweite bzw. BOT-Steuersignale 17 zur Steuerung der BOT-Schalter 9 der Halbbrücken 3 erzeugt. Durch das der Steuerlogikeinrichtung 15 zugeführte Ansteuersignal 19 wird ein Soll-Betriebszustand der Synchronmaschine vorgegeben, welcher sich durch ein Soll-Drehmoment (Drehmomentanforderung) und eine Soll-Drehzahl auszeichnet. Das Ansteuersignal 19 wird vom übergeordneten Motorsteuergerät beispielsweise aufgrund einer momentanen Gaspedalstellung erzeugt.

Wie in Fig. 1 veranschaulicht, werden der Steuerlogikeinrichtung 15 weiterhin eine Mehrzahl Sensorsignale 18 als Eingangssignale zugeführt, welche den Ist-Betriebszustand von Synchronmaschine und 3-Phasen-Wechselrichter 1 beschreiben, hier beispielsweise Stromgröße (Amplitude) der erzeugten Wechselstromphasen u, v, w, Rotationsgeschwindigkeit bzw. Drehzahl und Position des Rotors der Synchronmaschine, Temperatur der Synchronmaschine, sowie die im Zwischenkreis des 3-Phasen-Wechselrichters 1 vorliegende Zwischenkreisspannung. Die Steuerlogikeinrichtung 15 des primärseitigen Schaltungsteils 12 erzeugt die TOP- und BOT-Steuersignale 16, 17 auf Basis dieser Sensorsignale 18. Insbesondere kann die Steuerlogikeinrichtung 15 aus den zugeführten Sensorsignalen 18 ein Ist-Drehmoment ableiten, so dass durch einen Abgleich von Ist-Drehmoment mit Soll-Drehmoment und Ist-Drehzahl mit Soll-Drehzahl eine Regelung des Synchronmaschine ermöglicht ist und der Erfolg der Motorsteuerung kontrolliert werden kann. Wie üblich werden die TOP- und BOT-Steuersignale 16, 17 durch Anwenden des Pulsweitenmodulationsverfahrens (PWM = Pulsweienmodulation) erzeugt.

Dem Fachmann ist die Verwendung von PWM-Signalen zur Gate-Steuerung von Leistungsschaltern 4 an sich bekannt, so dass hier nicht näher darauf eingegangen werden muss.

Im primärseitigen Schaltungsteil 12 werden die von der Steuerlogikeinrichtung 15 generierten TOP- und BOT-Steuersignale 16, 17 einem programmierbaren Sicherheitslogikbaustein 20 zugeführt, in dem verschiedene Sicherheitsfunktionen implementiert sind. Insbesondere werden die TOP- und BOT-Steuersignale 16, 17 miteinander abgeglichen, um ein gleichzeitiges in Durchlasszustand Schalten aller Leistungsschalter 4 zu vermeiden. Zudem kann im Fehlerfall eine Weiterleitung der TOP- und BOT-Steuersignale 16, 17 durch den Sicherheitslogikbaustein 20 blockiert werden.

Die den Sicherheitslogikbaustein 20 passierenden TOP-Steuersignale 16 werden einer TOP-Treiberschaltung 21 zum Steuern der TOP-Schalter 8, die BOT-Steuersignale 17 einer BOT-Treiberschaltung 22 zum Steuern der BOT-Schalter 9 zugeführt. In der TOP-Treiberschaltung 21 werden, abhängig von den Logikpegeln der TOP-Steuersignale 16, TOP-Steuerspannungen 23 erzeugt, welche den Steuereingängen der TOP-Schalter 8 direkt anliegen, um die TOP-Schalter 8 ein- oder auszuschalten. In entsprechender Weise werden in der BOT-Treiberschaltung 22, abhängig von den Logikpegeln der BOT-Steuersignale 17, BOT-Steuerspannungen 24 erzeugt, welche den Steuereingängen der BOT-Schalter 9 direkt anliegen, um die BOT-Schalter 9 ein- oder auszuschalten. Durch geeignetes Schalten der Leistungsschalter 4 können die Wechselstromphasen u, v, w an den Lastausgängen 10 der Halbbrücken 3 erzeugt werden.

Die verschiedenen Komponenten des primärseitigen Schaltungsteils 12 der Steuerschaltung 11 werden mit mehreren Betriebsspannungen (z.B. Logikspannungen) gespeist, welche in der Regel im Bereich von 1 bis 24 Volt liegen und in Kraftfahrzeugen typischer Weise aus der Bordspannung (12 oder 24 Volt) generiert werden. Im vorliegenden Fall werden durch eine primärseitige Versorgungseinrichtung 30 beispielsweise primärseitige Betriebsspannungen von 1,2 Volt, 1,5 Volt, 3,3 Volt und 5 Volt aus einer Bordspannung von beispielsweise 12 Volt generiert. Im Unterschied hierzu liegt der sekundärseitige Schaltungsteil 13 der Steuerschaltung 11 auf einem Hochvoltpotential, welches beispielsweise im Bereich von 600 bis 900 Volt liegt.

Der sekundärseitige Schaltungsteil 13 der Steuerschaltung 11 umfasst eine steuerbare Zusatzschaltung 25, welche zum gleichzeitigen Einschalten aller BOT-Schalter 9 zum aktiven Kurzschließen der Lastausgänge 10 der Halbbrücken 3 beim Ausfall wenigstens einer primärseitigen Betriebsspannung dient. Wie in Fig. 1 erkennbar, umfasst die Zusatzschaltung 25 zu diesem Zweck einen programmierbaren Steuerlogikbaustein 26 zur Ansteuerung der BOT-Schalter 9.

Eine Ansteuerung des Steuerlogikbausteins 26 erfolgt durch ein Fehlersignal 28, welches durch einen Komparator 29 im primärseitigen Schaltungsteil 12 der Steuerschaltung 11 erzeugt wird. Das Fehlersignal 28 umfasst einen niedrigen Logikpegel und einen hohen Logikpegel, wobei beispielsweise dem fehlerlosen Zustand des primärseitigen Schaltungsteils 12, in dem alle primärseitigen Betriebspannungen fehlerfrei vorliegen, der hohe Logikpegel und dem Fehlerfall, in dem wenigstens eine primärseitige Betriebsspannung ausfällt oder zumindest vom Sollwert abweicht, der niedrige Logikpegel zugeordnet ist. Zu diesem Zweck werden dem Komparator 29 die primärseitigen Betriebsspannungen als Eingangssignale zugeführt. Der Komparator 29 ist hier beispielsweise in Form von Fensterkomparatoren für die primärseitigen Betriebsspannungen ausgeführt, wobei der Komparator 29 den Logikpegel des Fehlersignals 28 ändert (beispielsweise von High zu Low), wenn wenigstens eine primärseitige Betriebsspannung ausfällt oder außerhalb eines vorgegebenen bzw. vorgebbaren Wertebereichs für den Sollwert liegt.

Dem Steuerlogikbaustein 26 wird das vom Komparator 29 erzeugte Fehlersignal 28 als Eingangssignal zugeführt. Gleichzeitig wird das Fehlersignal 28 dem Sicherheitslogikbaustein 20 des primärseitigen Schaltungsteils 12 als Eingangsignal zugeführt. Der Sicherheitslogikbaustein 20 ist so eingerichtet, dass nur dann eine Weiterleitung der TOP- und BOT-Steuersignale 16, 17 an die TOP- bzw. BOT-Treiberschaltung 21, 22 erfolgt, wenn ein den fehlerlosen Zustand der primärseitigen Betriebsspannungen anzeigender Logikpegel (z.B. High) des Fehlersignals 28 dem Sicherheitslogikbaustein 20 anliegt. Alternativ, falls der den Ausfall wenigstens einer primärseitigen Betriebsspannung anzeigende Logikpegel (z.B. Low) des Fehlersignals 28 dem Sicherheitslogikbaustein 20 anliegt, erfolgt eine Blockierung der TOP- und BOT-Steuersignale 16, 17 im Sicherheitslogikbaustein 20.

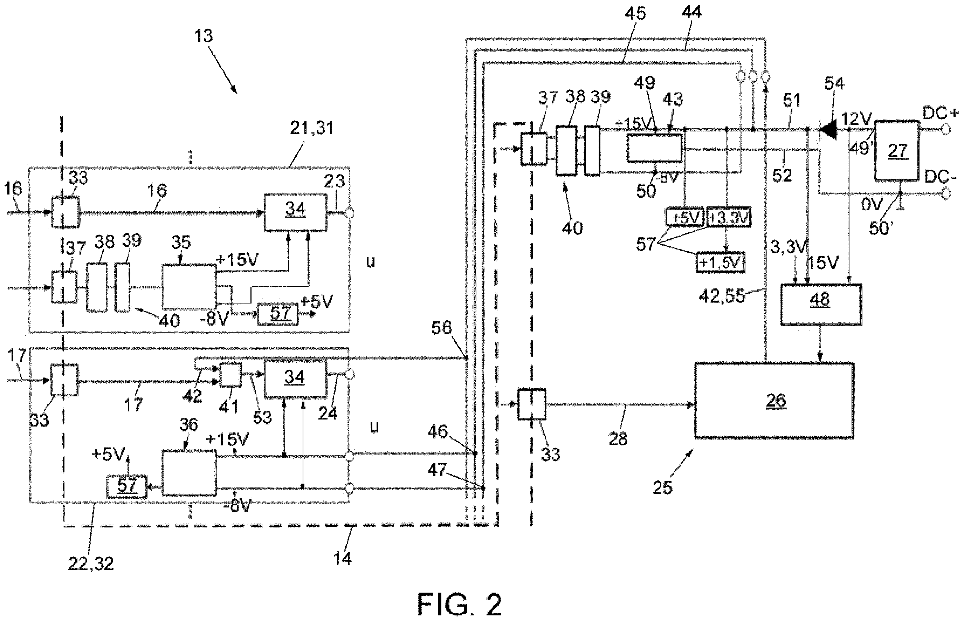

Es sei nun ergänzend Fig. 2 betrachtet, worin der sekundäre Schaltungsteil 13 der Steuerschaltung 11 des 3-Phasen-Wechselrichters 1 in schematischer Weise näher dargestellt ist. Die galvanische Trennung zwischen dem primärseitigen Schaltungsteil 12 und dem sekundärseitigen Schaltungsteil 13 ist wie in Fig. 1 durch eine gestrichelte Trennlinie 14 kenntlich gemacht.

In Fig. 2 sind insbesondere die TOP-Treiberschaltung 21 zur Steuerung der TOP-Schalter 8 und die BOT-Treiberschaltung 22 zur Steuerung der BOT-Schalter 9 näher gezeigt. Demnach umfasst die TOP-Treiberschaltung 21 für jede Halbbrücke 3 eine TOP-Treiberteilschaltung 31, die zur Ansteuerung des TOP-Schalters 8 in der zugehörigen Halbbrücke 3 dient. Zum Zwecke einer einfacheren Darstellung ist in Fig. 2 lediglich eine einzige TOP-Treiberteilschaltung 31 dargestellt, wobei es sich versteht, dass für jede Halbbrücke 3 eine separate TOP-Treiberteilschaltung 31 vorgesehen ist.

Jede TOP-Treiberteilschaltung 31 umfasst eine Gegentakt- bzw. Push-Pull-Endstufe 34 zur Erzeugung der TOP-Steuerspannung 23 in Abhängigkeit des Logikpegels des über einen Optokoppler 33 zugeführten TOP-Steuersignals 16 (PWM-Signal). Die von der Push-Pull-Endstufe 34 erzeugte TOP-Steuerspannung 23 liegt dem Steuereingang des zugehörigen TOP-Schalters 8 direkt an, wobei beispielsweise bei einem hohen Logikpegel der TOP-Schalter 8 eingeschaltet wird, wohingegen bei einem niedrigen Logikpegel der TOP-Schalter 8 ausgeschaltet wird. Der Optokoppler 33 dient zur galvanischen Trennung des primär- und sekundärseitigen Schaltungsteils 12, 13 im Bereich der TOP-Treiberteilschaltung 31.

Jede TOP-Treiberteilschaltung 31 umfasst weiterhin eine TOP-Versorgungseinrichtung 35 zur Versorgung der TOP-Treiberteilschaltung 31 mit einer ersten sekundärseitigen Betriebsspannung von beispielsweise +15/-8 Volt. Durch eine Zusatzversorgungseinrichtung 57 wird eine zweite sekundärseitige Betriebsspannung von beispielsweise +5 Volt aus der ersten sekundärseitigen Betriebsspannung generiert. Die Erzeugung der ersten sekundärseitigen Betriebsspannung von beispielsweise +15/-8 Volt ist an wenigstens eine der primärseitigen Betriebsspannungen gekoppelt, so dass bei einem Ausfall einer primärseitigen Betriebsspannung in der Regel auch die sekundärseitigen Betriebsspannungen ausfallen. Die TOP-Treiberversorgung 35 umfasst zu diesem Zweck ein treiberinternes Schaltnetzteil 40 mit Potentialtrennung, welches in an sich bekannter Weise über einen Transformator 37 zur Leistungsübertragung, einen Gleichrichter 38 und einen Siebkondensator 39 zur Spannungsglättung verfügt. Das Schaltnetzteil 40 wird von einer primärseitigen Betriebsspannung getaktet. Aufbau und Funktion eines derartigen Schaltnetzteils 40 sind dem Fachmann an sich bekannt, so dass hier nicht näher darauf eingegangen werden muss.

In entsprechender Weise umfasst die BOT-Treiberschaltung 22 für jede Halbbrücke 3 eine BOT-Treiberteilschaltung 32, die zur Ansteuerung des BOT-Schalters 9 in der zugehörigen Halbbrücke 3 dient. In Fig. 2 ist lediglich eine einzige BOT-Treiberteilschaltung 32 dargestellt, wobei es sich versteht, dass für jede Halbbrücke 3 eine separate BOT-Treiberteilschaltung 32 vorgesehen ist.

Jede BOT-Treiberteilschaltung 32 umfasst eine Gegentakt- bzw. Push-Pull-Endstufe 34 zur Erzeugung der BOT-Steuerspannung 24 auf Basis des über einen Optokoppler 33 zugeführten BOT-Steuersignals 17 (PWM-Signal). Die von der Push-Pull-Endstufe 34 erzeugte BOT-Steuerspannung 24 liegt dem Steuereingang des zugehörigen BOT-Schalters 9 direkt an. Der Optokoppler 33 dient zur galvanischen Trennung des primär- und sekundärseitigen Schaltungsteils 12, 13 im Bereich der BOT-Treiberteilschaltung 32.

Im Unterschied zur TOP-Treiberteilschaltung 31 ist in der BOT-Treiberteilschaltung 32 der Push-Pull-Endstufe 34 ein logisches ODER-Gatter 41 vorgeschaltet, dem das BOT-Steuersignal 17 als erstes Eingangssignal anliegt. Als zweites Eingangssignal liegt dem ODER-Gatter 41 ein BOT-Treibersignal 42 an, auf das weiter unten noch näher eingegangen wird. Beispielsweise generiert das ODER-Gatter 41 an seinem Signalausgang ein ODER-Gattersignal 53 mit einem hohen Logikpegel, falls ein hoher Logikpegel des ersten Eingangssignals und/oder ein hoher Logikpegel des zweiten Eingangssignals anliegen, oder ein ODER-Gattersignal 53 mit einem niedrigen Logikpegel, falls ein niedriger Logikpegel des ersten Eingangssignals bzw. kein Eingangssignal und/oder ein niedriger Logikpegel des zweiten Eingangssignals bzw. kein zweites Eingangssignal anliegen. Die Push-Pull-Endstufe 34 wird über das ODER-Gattersignal 53 angesteuert, wobei hier beispielsweise bei einem hohen Logikpegel des ODER-Gattersignals 53 der BOT-Schalter 9 eingeschaltet wird, wohingegen bei einem niedrigen Logikpegel des ODER-Gattersignals 53 der BOT-Schalter 9 ausgeschaltet wird. Der Optokoppler 33 dient zur galvanischen Trennung des primär- und sekundärseitigen Schaltungsteils 12, 13 im Bereich der BOT-Treiberteilschaltung 32.

Jede BOT-Treiberteilschaltung 32 umfasst weiterhin eine BOT-Versorgungseinrichtung 36 zur Versorgung der BOT-Treiberteilschaltung 32 mit einer ersten sekundärseitigen Betriebsspannung von beispielsweise +15/-8 Volt. Durch eine Zusatzversorgungseinrichtung 57 wird eine zweite sekundärseitige Betriebsspannung von beispielsweise +5 Volt aus der ersten sekundärseitigen Betriebsspannung generiert.

Im Unterschied zu den TOP-Treiberteilschaltungen 31 erfolgt eine gemeinsame Speisung der BOT-Versorgungseinrichtungen 36 mit der ersten sekundärseitigen Betriebsspannung durch eine sekundärseitige Versorgungseinrichtung 43 im sekundärseitigen Schaltungsteil 13 der Steuerschaltung 11. Die sekundärseitige Versorgungseinrichtung 43 ist an wenigstens eine primärseitige Betriebsspannung gekoppelt. Die sekundärseitige Versorgungseinrichtung 43 umfasst ein Schaltnetzteil 40 mit Potentialtrennung, welches über einen Transformator 37 zur Leistungsübertragung, einen Gleichrichter 38 und eine Siebkondensator 39 zur Spannungsglättung verfügt. Das Schaltnetzteil 40 wird von einer primärseitigen Betriebsspannung getaktet, so dass bei einem Ausfall wenigstens einer primärseitigen Betriebsspannung in der Regel auch ein Ausfall der sekundärseitigen Betriebsspannungen die Folge ist. Durch weitere Zusatzversorgungseinrichtungen 57, welche an die sekundärseitige Versorgungseinrichtung 43 angeschlossen sind, werden weitere sekundärseitige Betriebsspannungen von beispielsweise 1,5 Volt, 3,3 Volt und 5 Volt aus der ersten sekundärseitigen Betriebsspannung generiert. Diese dienen einer Speisung der Zusatzschaltung 25.

Wie in Fig. 2 veranschaulicht, sind eine erste elektrische Versorgungsleitung 44 und eine zweite elektrische Versorgungsleitung 45 zur Speisung der drei BOT-Treiberteilschaltungen 32 mit der ersten sekundärseitigen Betriebsspannung vorgesehen, wobei die erste Versorgungsleitung 44 an einen ersten Spannungsausgang 49 und die zweite Versorgungsleitung 45 an einen zweiten Spannungsausgang 50 zur Bereitstellung der ersten sekundärseitigen Betriebsspannung (+15/-8 Volt) angeschlossen sind. Die BOT-Versorgungseinrichtungen 36 greifen jeweils über einen ersten Spannungsabgriff 46 und einen zweiten Spannungsabgriff 47 die Potentiale an den Versorgungsleitungen 44, 45 ab.

Lediglich der Vollständigkeit halber sei darauf hingewiesen, dass die Treiberteilschaltungen 31, 32 in der Regel eine Reihe weiterer Schaltungsglieder, beispielsweise eine Einrichtung zur Überwachung der Kollekor-Emitter-Spannung oder eine Einrichtung zur Detektion einer Treiberunterspannung, umfassen, worauf hier nicht näher eingegangen wird.

In der Zusatzschaltung 25 dient ein an die Zwischenkreisspannung (DC+, DC-) angeschlossener Gleichstrom/Gleichstrom-Wandler (DC/DC-Wandler) 27 als Ersatzspannungsversorgung bei einem Ausfall der sekundärseitigen Versorgungseinrichtung 43. Zu diesem Zweck ist ein erster Spannungsausgang 49' des DC/DC-Wandlers 27 durch eine erste elektrische Verbindungsleitung 51 an den ersten Spannungsausgang 49 der sekundärseitigen Versorgungseinrichtung 43 angeschlossen, während ein zweiter Spannungsausgang 50' des DC/DC-Wandlers 27 durch eine zweite elektrische Verbindungsleitung 53 so an die sekundärseitige Versorgungseinrichtung 43 angeschlossen ist, dass dessen Potential am zweiten Spannungsausgang 50 der sekundärseitigen Versorgungseinrichtung 43 anliegt. Die erste Versorgungsleitung 44 ist hier beispielsweise an die erste Verbindungsleitung 51, die zweite Versorgungsleitung 45 an den zweiten Spannungsausgang 50 der sekundärseitigen Versorgungseinrichtung 43 angeschlossen.

Der DC/DC-Wandler 27 wandelt die Zwischenkreisspannung (DC+, DC-) in eine zum Betreiben der Zusatzschaltung 25 und der BOT-Treiberschaltung 22 bzw. BOT-Treiberteilschaltungen 32 geeignete Gleichspannung um. Im vorliegenden Fall wandelt der DC/DC-Wandler 27 das obere Potential (DC+) beispielsweise in ein Potential von +12 Volt um, welches am ersten Spannungsausgang 49' anliegt, während das untere Potential (DC-) in ein Potential von 0 Volt umgewandelt wird, welches am zweiten Spannungsausgang 50' anliegt. Falls die sekundärseitige Versorgungseinrichtung 43 ausfällt, liegen somit die Potentiale +12/0 Volt des DC/DC-Wandlers 27 den Spannungsausgängen 49, 50 der sekundärseitigen Versorgungseinrichtung 43 an. Insofern werden bei einem Ausfall der sekundärseitigen Versorgungseinrichtung 43 alle Logikbauteile, welche im Normalbetrieb von der sekundärseitigen Versorgungseinrichtung 43 versorgt werden, vom DC/DC-Wandler 27 ersatzweise versorgt. Insbesondere werden die BOT-Versorgungseinrichtungen 36 im Fehlerfall vom DC/DC-Wandler 27 mit einer Spannung von +12 Volt gespeist, welche ausreicht, alle BOT-Schalter 9 gleichzeitig einzuschalten.

Die vom DC/DC-Wandler 27 generierte Ersatzspannung (+12/0 Volt) wird gleichzeitig mit der ersten sekundären Betriebsspannung (+15/-8 Volt) bereit gestellt, wobei sie kleiner ist als die erste sekundäre Betriebsspannung, so dass die erste sekundäre Betriebsspannung vorgreiflich zur Spannungsversorgung dient. Zudem kann dadurch ein Stromfluss zum DC/DC-Wandler 27 unterbunden werden.

In der Zusatzschaltung 25 ist der erste Spannungsausgang 49' des DC/DC-Wandlers 27 unter Zwischenschaltung eines als Diode 54 ausgebildeten Stromventils an den ersten Spannungsausgang 49 der sekundärseitigen Versorgungseinrichtung 43 angeschlossen. Die Diode 54 ist so angeordnet, dass ein Stromfluss zum DC/DC-Wandler 27 blockiert, in Gegenrichtung jedoch ermöglicht ist. Für eine Umladung der BOT-Schalter 9 beim Schalten in den Durchlasszustand muss der DC/DC-Wandler 27 einen hinreichenden Umladungsstrom zur Verfügung stellen, was stets sichergestellt werden kann.

Die Zusatzschaltung 25 verfügt über den Steuerlogikbaustein 26, welcher unter Zwischenschaltung eines Optokopplers 33 das vom Komparator 29 erzeugte Fehlersignal 28 als Eingangssignal erhält. Der Steuerlogikbaustein 26 ist so eingerichtet, dass er auf Basis des Fehlersignals 28 das bereits erwähnte BOT-Treibersignal 42 erzeugt, das über einen nicht näher bezeichneten Signalausgang einer BOT-Treibersignalleitung 55 aufgeprägt wird. In den BOT-Treiberteilschaltung 32 wird jeweils über einen Signalabgriff 56 das BOT-Treibersignal 42 von der BOT-Treibersignalleitung 55 abgegriffen und als zweites Eingangssignal dem ODER-Gatter 41 angelegt. Liegt dem Steuerlogikbaustein 26 beispielsweise ein Fehlersignal 28 mit einem niedrigen Logikpegel (Low) an, welcher den Ausfall einer primärseitigen Betriebsspannung kennzeichnet, wird ein BOT-Treibersignal 42 mit einem hohen Logikpegel (High) erzeugt, wohingegen ein BOT-Treibersignal 42 mit einem niedrigen Logikpegel (Low) erzeugt wird, falls ein Fehlersignal 28 mit einem hohen Logikpegel (High) anliegt, das den fehlerlosen Betrieb des primärseitigen Schaltungsteils 12 kennzeichnet. Durch einen hohen Logikpegel des BOT-Treibersignals 42 werden alle BOT-Schalter 9 gleichzeitig eingeschaltet.

Der Steuerlogikbaustein 26 wird im normalen Betrieb von der sekundärseitigen Versorgungseinrichtung 43 und den Zusatzversorgungseinrichtungen 57 mit seinen Betriebsspannungen versorgt, was in Fig. 2 nicht näher dargestellt ist. Bei einem Ausfall der sekundärseitigen Versorgungseinrichtung 43 werden die Spannungsausgänge 49, 50 der sekundärseitigen Versorgungseinrichtung 43 mit der vom DC/DC-Wandler 27 erzeugten Ersatzspannung beaufschlagt, so dass (neben weiteren Logikbauteilen der Zusatzschaltung 25) auch eine ersatzweise Spannungsversorgung des Steuerlogikbausteins 26 erfolgt.

Dem Steuerlogikbaustein 26 wird über einen Analog-Digital-Wandler (A/D-Wandler) 48 die vom DC/DC-Wandler 27 erzeugte Gleichspannung als Eingangssignal zugeführt. Ein nicht näher bezeichneter Signaleingang des A/D-Wandlers 48 ist zu diesem Zweck an die erste Verbindungsleitung 51 angeschlossen. Der A/D-Wandler 48 wird im normalen Betrieb von der sekundärseitigen Versorgungseinrichtung 43 (und gegebenenfalls den Zusatzversorgungseinrichtungen 57) gespeist. Bei einem Ausfall der sekundärseitigen Versorgungseinrichtung 43 übernimmt der DC/DC-Wandler 27 die Funktion der sekundärseitigen Versorgungseinrichtung 43.

Im fehlerfreien Fall, bei welchem die primärseitigen Betriebsspannungen fehlerfrei vorliegen, erzeugt der Komparator 29 ein Fehlersignal 28 mit einem beispielsweise niedrigen Logikpegel, so dass die auf Basis eines Ansteuersignals 19 erzeugten TOP- und BOT-Steuersignale 16, 17 ungehindert an die TOP- bzw. BOT-Treiberschaltung 21, 22 zur Erzeugung der TOP- bzw. BOT-Steuerspannungen 23, 24 weitergeleitet werden. Dementsprechend wird auch die erste sekundärseitige Betriebsspannung (+15/-8 Volt) von der sekundärseitigen Versorgungseinrichtung 43 sowie alle weiteren sekundärseitigen Betriebsspannung von den Zusatzversorgungseinrichtungen 57 bereitgestellt. Gleichzeitig wandelt der DC/DC-Wandler 27 die Zwischenkreisspannung (DC+, DC-) in eine Ersatzspannung (+12/0 Volt) um. Der Steuerlogikbaustein 26 erzeugt aufgrund des niedrigen Logikpegels des Fehlersignals 28 ein BOT-Treibersignal 42 mit einem beispielsweise niedrigen Signalpegel, so dass in den BOT-Treiberteilschaltungen 32 durch das am ODER-Gatter 41 anliegende BOT-Steuersignal 17 ein ODER-Gattersignal 53 erzeugt wird, durch welches die Push-Pull-Endstufe 34 in Abhängigkeit des Logikpegels angesteuert wird.

Im Fehlerfall, bei welchem wenigstens eine primärseitige Betriebsspannung ausfällt, erzeugt der Komparator 29 ein Fehlersignal 28 mit einem beispielsweise hohen Logikpegel, so dass die auf Basis eines Ansteuersignals 19 erzeugten TOP- und BOT-Steuersignale 16, 17 im Sicherheitslogikbaustein 20 aufgrund des Fehlersignals 28 blockiert und nicht an die TOP- bzw. BOT-Treiberschaltung 21, 22 weitergeleitet werden. In der Regel erzeugt die sekundärseitige Versorgungseinrichtung 43 in diesem Fall keine sekundärseitige Betriebsspannung, so dass die beiden Potentialausgänge Spannungsausgänge 49, 50 der sekundärseitigen Versorgungseinrichtung 43 von der vom DC/DC-Wandler 27 aus der Zwischenkreisspannung (DC+, DC-) gewandelten Ersatzspannung beaufschlagt werden. Somit werden die BOT-Versorgungseinrichtungen 36 und die Zusatzschaltung 25 von der Ersatzspannung des DC/DC-Wandlers 27 gespeist. Der Steuerlogikbaustein 26 erzeugt aufgrund des hohen Logikpegels des Fehlersignals 28 ein BOT-Treibersignal 42 mit einem beispielsweise hohen Logikpegel, so dass in den BOT-Treiberteilschaltungen 32 durch das am ODER-Gatter 41 anliegende BOT-Treibersignal 42 ein ODER-Gattersignal 53 zum Einschalten des BOT-Schalters 9 erzeugt wird. Hierbei werden alle BOT-Schalter 9 gleichzeitig eingeschaltet, so dass die drei Lastausgänge 10 kurzgeschlossen werden und die jeweils um 120° phasenversetzten Stromphasen zu einem schnellen Abklingen des von der Synchronmaschine erzeugten Stroms führen. Insbesondere kann bei der Speisung einer im Feldschwächbetrieb laufenden Synchronmaschine mit permanenter Felderregung eine Schädigung von Leistungsbauteilen sowie des Spannungszwischenkreises des 3-Phasen-Wechselrichters 1 zuverlässig und sicher vermieden werden.

In der Zusatzschaltung 25 ist der Steuerlogikbaustein 26 schaltungs- und/oder programmtechnisch so eingerichtet, dass bei entsprechender Ansteuerung durch das Fehlersignal 28 ein Einschalten aller BOT-Schalter 9 durch das BOT-Treibersignal 42 erst mit einer gewissen Zeitverzögerung von beispielsweise einigen Mikrosekunden nach Ausschalten der TOP-Schalter 8 erfolgt, um einen Kurzschluss des Spannungszwischenkreises 6 zu vermeiden.

Der Steuerlogikbaustein 25 ist weiterhin schaltungs- und/oder programmtechnisch so eingerichtet, dass ein Einschalten aller BOT-Schalter 9 nur dann erfolgt, wenn der DC/DC-Wandler 27 eine Ersatzspannung vorgegebener bzw. vorgebbarer Größe (z.B. +12 Volt) bereitstellt. Dem Steuerlogikbaustein 25 wird zu diesem Zweck über den A/D-Wandler 48 ein digitaler Spannungswert als Eingangssignal übermittelt. Falls der DC/DC-Wandler 27 keine ausreichende Ersatzspannung bereitstellt, erfolgt kein Einschalten der BOT-Schalter 9 durch das BOT-Treibersignal 42.

Ferner wird dem Steuerlogikbaustein 25 die Zwischenkreisspannung (DC+, DC-) als Eingangssignal übermittelt, was in Fig. 2 nicht näher dargestellt ist. Hierbei ist der Steuerlogikbaustein 25 schaltungs- und/oder programmtechnisch so eingerichtet, dass ein Kurzschließen der BOT-Schalter 9 durch das BOT-Treibersignal 42 nur dann erfolgt, wenn die Zwischenkreisspannung einen vorgegebenen bzw. vorgebbaren oberen Spannungsschwellwert (z.B. 420 Volt) überschreitet und einen vorgegebenen bzw. vorgebbaren unteren Spannungsschwellwert (z.B. 60 Volt) nicht unterschreitet. Somit erfolgt ein Einschalten der BOT-Schalter 9 durch das BOT-Treibersignal 42 nur dann, wenn die Zwischenkreisspannung gleich oder kleiner als der obere Spannungsschwellwert ist. Zudem wird der durch das BOT-Treibersignal 42 ausgelöste Kurzschluss der Lastausgänge 10 durch Ausschalten aller BOT-Schalter 9 aufgehoben, wenn die Zwischenkreisspannung unter den unteren Spannungsschwellwert fällt.

Der erfindungsgemäße 3-Phasen-Wechselrichter 1 schafft somit erstmals die Möglichkeit, dass bei einem Ausfall oder Abweichen vom Sollwert einer primärseitigen Betriebsspannung, welche in der Regel auch einen Ausfall der sekundärseitigen Betriebsspannungen zur Folge hat, alle BOT-Schalter 9 zuverlässig und sicher eingeschaltet werden, um die Lastausgänge 10 der Halbbrücken 3 kurzzuschließen. Erreicht wird dies durch eine Ersatzspannungsversorgung der Logikbauteile der BOT-Treiberschaltung 22 und der Zusatzschaltung 25 durch den DC/DC-Wandler 27, welcher aus der Zwischenkreisspannung eine Ersatzspannung geeigneter Größe erzeugt. Eine Ansteuerung der BOT-Schalter 9 im Fehlerfall erfolgt durch ein gemeinsames BOT-Treibersignal 42, das vom Steuerlogikbaustein 26 auf Basis des Fehlersignals 28 erzeugt wird. Somit kann bei einem Ausfall einer primärseitigen Betriebsspannung stets ein sicherer Betriebszustand einer im Feldschwächbetrieb gespeisten Synchronmaschine mit permanentmagnetischer Felderregung erreicht werden. Der erfindungsgemäße Stromrichter zeichnet sich durch einen technisch einfachen, kostengünstigen und zugleich robusten Aufbau aus. In besonders vorteilhafter Weise liegt die vom DC/DC-Wandler 27 generierte Ersatzspannung an den zu speisenden Komponenten sofort an, was nicht der Fall wäre, wenn der primärseitige Schaltungsteil 12 durch eine aus der Zwischenkreisspannung generierte Betriebsspannung ersatzweise versorgt würde, da mit einer erheblichen Zeitverzögerung der Ersatzspannungsversorgung durch die galvanische Trennung zu rechnen ist. Zudem könnte in diesem Fall, beispielsweise beim Ausfall eines Logikbauteils des primärseitigen Schaltungsteils 12 nicht sichergestellt werden, dass alle BOT-Schalter gleichzeitig eingeschaltet werden.

### Bezugszeichenliste

1 3-Phasen-Wechselrichter
2 Brückenschaltung
3 Halbbrücke
4 Leistungsschalter
5 Verbindungspunkt
6 Spannungszwischenkreis
7, 7' Zwischenkreisleitung
8 TOP-Schalter
9 BOT-Schalter
10 Lastausgang
11 Steuerschaltung
12 primärseitiger Schaltungsteil
13 sekundärseitiger Schaltungsteil
14 Trennlinie
15 Steuerlogikeinrichtung
16 TOP-Steuersignal
17 BOT-Steuersignal
18 Sensorsignal
19 Ansteuersignal
20 Sicherheitslogikbaustein
21 TOP-Treiberschaltung
22 BOT-Treiberschaltung
23 TOP-Steuerspannung
24 BOT-Steuerspannung
25 Zusatzschaltung
26 Steuerlogikbaustein
27 DC/DC-Wandler
28 Fehlersignal
29 Komparator
30 primärseitige Versorgungseinrichtung
31 TOP-Treiberteilschaltung
32 BOT-Treiberteilschaltung
33 Optokoppler
34 Push-Pull-Endstufe
35 TOP-Versorgungseinrichtung
36 BOT-Versorgungseinrichtung
37 Transformator
38 Gleichrichter
39 Siebkondensator
40 Schaltnetzteil
41 ODER-Gatter
42 BOT-Treibersignal
43 sekundärseitige Versorgungseinrichtung
44 erste Versorgungsleitung
45 zweite Versorgungsleitung
46 erster Spannungsabgriff
47 zweiter Spannungsabgriff
48 A/D-Wandler
49, 49' erster Spannungsausgang
50, 50' zweiter Spannungsausgang
51 erste Verbindungsleitung
52 zweite Verbindungsleitung
53 ODER-Gattersignal
54 Diode
55 BOT-Treibersignalleitung
56 Signalabgriff
57 Zusatzversorgungseinrichtung

## Patentansprüche

1. Stromrichter (1) mit einem Spannungszwischenkreis (6) zum Bereitstellen einer Zwischenkreisspannung(DC+, DC-), an den eine Mehrzahl Halbbrücken (3) mit TOP- und BOT-Schaltern (8, 9) angeschlossen ist, und einer Steuerschaltung (11) zur Ansteuerung der Leistungsschalter (8, 9), welche in einen primärseitigen Schaltungsteil (12) und einen sekundärseitigen Schaltungsteil (13) unterteilt ist,
wobei der primärseitige Schaltungsteil (12) umfasst:
- eine primärseitige Versorgungseinrichtung (30) zur Erzeugung von einer oder mehreren primärseitigen Betriebsspannungen zur Versorgung des primärseitigen Schaltungsteils (12),
- ein Prüfglied (29) zum Prüfen des Vorliegens vorbestimmbarer Sollwerte der primärseitigen Betriebsspannungen und Ausgeben eines Fehlersignals (28),
wobei der sekundärseitige Schaltungsteil (13) umfasst:
- eine durch TOP-Steuersignale (16) steuerbare TOP-Treiberschaltung (21) zur Ansteuerung der TOP-Schalter (8),
- eine durch BOT-Steuersignale (17) steuerbare BOT-Treiberschaltung (22) zur Ansteuerung der BOT-Schalter (9),
- eine Zusatzschaltung (25) mit einem an die BOT-Treiberschaltung (22) angeschlossenen Steuerlogikbaustein (26), welcher dazu ausgebildet ist, ein BOT-Treibersignal (42) auf Basis des Fehlersignals (28) abzugeben, wobei ein Einschalten aller BOT-Schalter (9) erfolgt, falls wenigstens eine primärseitige Betriebsspannung vom Sollwert abweicht,
- eine sekundärseitige Versorgungseinrichtung (43) zur Erzeugung wenigstens einer sekundärseitigen Betriebsspannung zur Versorgung der BOT-Treiberschaltung (22) und der Zusatzschaltung (25),
- einen Gleichstrom/Gleichstrom-Wandler (27) zur Umwandlung der Zwischenkreisspannung in eine sekundärseitige Ersatzspannung zur Versorgung der BOT-Treiberschaltung (22) und der Zusatzschaltung (25) bei Ausfall der sekundärseitigen Betriebsspannung.

2. Stromrichter (1) nach Anspruch 1, bei welchem der Gleichstrom/Gleichstrom-Wandler (27) dazu ausgebildet ist, eine Ersatzspannung zu erzeugen, die kleiner ist als die sekundärseitige Betriebsspannung.

3. Stromrichter (1) nach einem der Ansprüche 1 oder 2, bei welchem der primärseitige Schaltungsteil (12) einen an das Prüfglied (29) angeschlossenen Sicherheitslogikbaustein (20) zur Weiterleitung der TOP-Steuersignale (16) und BOT-Steuersignale (17) umfasst, wobei der Sicherheitslogikbaustein (20) dazu ausgebildet ist, eine Weiterleitung der TOP- und BOT-Steuersignale (16, 17) auf Basis des Fehlersignals (28) zu blockieren, falls wenigstens eine primärseitige Betriebsspannung vom Sollwert abweicht.

4. Stromrichter (1) nach einem der Ansprüche 1 bis 3, bei welchem das Prüfglied (29) für jede primärseitige Betriebsspannung einen Fensterkomparator umfasst, durch den geprüft werden kann, ob die primärseitigen Betriebsspannung innerhalb eines vorgebbaren Sollwertbereichs liegt.

5. Stromrichter (1) nach einem der Ansprüche 1 bis 4, bei welchem Spannungsausgänge (49', 50') des Gleichstrom/Gleichstrom-Wandlers (27) zur Bereitstellung der sekundärseitigen Betriebsspannung unter Zwischenschaltung einer einen Stromfluss in Richtung zum Gleichstrom/Gleichstrom-Wandler (27) blockierenden Diode (54) mit Spannungsausgängen (49, 50) der sekundärseitigen Versorgungseinrichtung (43) zur Bereitstellung der sekundärseitigen Betriebsspannung elektrisch verbunden sind.

6. Stromrichter (1) nach einem der Ansprüche 1 bis 5, bei welchem die BOT-Treiberschaltung (22) für jeden BOT-Schalter (9) ein ODER-Gatter (41) umfasst, das zur Steuerung einer Endstufe (34) zur Erzeugung einer Steuerspannung für den BOT-Schalter (9) dient, wobei an dem ODER-Gatter (41) die BOT-Steuersignale (17) als erstes Eingangssignal und das BOT-Treibersignal (42) als zweites Eingangssignal anliegen.

7. Stromrichter (1) nach einem der Ansprüche 1 bis 6, bei welchem der Steuerlogikbaustein (26) mit einem an die Zwischenkreisspannung angeschlossenen Analog/Digital-Wandler (48) verbunden ist, wobei ein auf der Ersatzspannung basierendes Ausgangssignal des Analog/Digital-Wandlers (48) dem Steuerlogikbaustein (26) anliegt.

8. Stromrichter (1) nach einem der Ansprüche 1 bis 7, bei welchem der Steuerlogikbaustein (26) so eingerichtet ist, dass ein Einschalten der BOT-Schalter (9) nach Ablauf einer vorgebbaren Verzögerungszeit nach Ausschalten der TOP-Schalter (8) erfolgt.

9. Stromrichter (1) nach einem der Ansprüche 1 bis 8, bei welchem der Steuerlogikbaustein (26) so eingerichtet ist, dass ein Einschalten der BOT-Schalter (9) durch das BOT-Treibersignal (42) nur oberhalb eines vorgebbaren oberen Grenzwerts für die Zwischenkreisspannung erfolgt und/oder die durch das BOT-Treibersignal (42) eingeschalteten BOT-Schalter (9) unterhalb eines vorgebbaren unteren Grenzwerts für die Zwischenkreisspannung durch das BOT-Treibersignal (42) ausgeschaltet werden.

10. Synchronmaschine mit permanentmagnetischer Felderregung, welche einen Stromrichter (1) nach einem der Ansprüche 1 bis 9 zur Versorgung mit einer mehrphasigen Betriebsspannung umfasst.

11. Verfahren zum Betreiben eines Stromrichters (1) mit einem Spannungszwischenkreis zum Bereitstellen einer Zwischenkreisspannung, an den eine Mehrzahl paralleler Halbbrücken (3) mit TOP- und BOT-Schaltern (8, 9) angeschlossen ist, und einer Steuerschaltung (11) für die Leistungsschalter (8, 9), welche in einen primärseitigen Schaltungsteil (12) und einen sekundärseitigen Schaltungsteil (13) unterteilt ist, wobei der sekundärseitige Schaltungsteil (13) eine TOP-Treiberschaltung (21) zur Steuerung der TOP-Schalter (8) und eine BOT-Treiberschaltung (22) zur Steuerung der BOT-Schalter (9) umfasst, mit den folgenden Schritten:
- Erzeugen von einer oder mehreren primärseitigen Betriebsspannungen zur Spannungsversorgung des primärseitigen Schaltungsteils (12),
- Prüfen des Vorliegens vorbestimmbarer Sollwerte der primärseitigen Betriebsspannungen und Erzeugen eines Fehlersignals (28),
- Erzeugen eines BOT-Treibersignals (42) auf Basis des Fehlersignals (28) durch eine sekundärseitige Zusatzschaltung (25) und Einschalten aller BOT-Schalter (9) durch das BOT-Treibersignal (42), falls wenigstens eine primärseitige Betriebsspannung vom Sollwert abweicht,
- Erzeugen wenigstens einer sekundärseitigen Betriebsspannung zur Versorgung der BOT-Treiberschaltung (22) und Zusatzschaltung (25),
- Umwandeln der Zwischenkreisspannung in eine Ersatzspannung zur Spannungsversorgung der BOT-Treiberschaltung (22) und Zusatzschaltung (25) bei Ausfall der sekundärseitigen Betriebsspannung.

12. Verfahren nach Anspruch 11, bei welchem eine Ersatzspannung erzeugt wird, die kleiner ist als die sekundärseitige Betriebsspannung.

13. Verfahren nach Anspruch 12, bei welchem eine Weiterleitung von TOP-Steuersignalen (16) zur TOP-Treiberschaltung (21) und BOT-Steuersignalen (17) zur BOT-Treiberschaltung (22) blockiert wird, falls wenigstens eine primärseitige Betriebsspannung vom Sollwert abweicht.

14. Verfahren nach einem der Ansprüche 11 bis 13, bei welchem die BOT-Schalter (9) nach Ablauf einer vorgebbaren Verzögerungszeit nach Ausschalten der TOP-Schalter (8) eingeschaltet werden.

15. Verfahren nach einem der Ansprüche 11 bis 14, bei welchem die BOT-Schalter (9) nur oberhalb eines vorgebbaren oberen Grenzwerts für die Zwischenspannung des Spannungszwischenkreises eingeschaltet werden und/oder die eingeschalteten BOT-Schalter (9) unterhalb eines vorgebbaren unteren Grenzwerts für die Zwischenspannung des Spannungszwischenkreises durch das BOT-Treibersignal (42) ausgeschaltet werden.

## Claims

1. Converter (1) having an intermediate voltage circuit (6) for providing an intermediate circuit voltage (DC+, DC-), to which intermediate voltage circuit a plurality of half-bridges (3) having TOP and BOT switches (8, 9) is connected, and having a control circuit (11) for actuating the power switches (8, 9), which control circuit is divided into a primary-side circuit part (12) and a secondary-side circuit part (13),
wherein the primary-side circuit part (12) comprises:
- a primary-side supply device (30) for generating one or more primary-side operating voltages for supplying power to the primary-side circuit part (12),
- a checking member (29) for checking for the presence of predeterminable setpoint values of the primary-side operating voltages and emitting a fault signal (28),
wherein the secondary-side circuit part (13) comprises:
- a TOP driver circuit (21) that can be controlled by TOP control signals (16) for actuating the TOP switches (8),
- a BOT driver circuit (22) that can be controlled by BOT control signals (17) for actuating the BOT switches (9),
- a supplementary circuit (25) having a control logic module (26) connected to the BOT driver circuit (22), which control logic module is designed to output a BOT driver signal (42) based on the fault signal (28), wherein all the BOT switches (9) are switched on if at least one primary-side operating voltage deviates from the setpoint value,
- a secondary-side supply device (43) for generating at least one secondary-side operating voltage for supplying power to the BOT driver circuit (22) and the supplementary circuit (25),
- a DC/DC converter (27) for converting the intermediate circuit voltage to a secondary-side equivalent voltage for supplying power to the BOT driver circuit (22) and the supplementary circuit (25) in the event of failure of the secondary-side operating voltage.

2. Converter (1) according to Claim 1, in which the DC/DC converter (27) is designed to generate an equivalent voltage that is lower than the secondary-side operating voltage.

3. Converter (1) according to either of Claims 1 and 2, in which the primary-side circuit part (12) comprises a safety logic module (20), which is connected to the checking member (29), for the purpose of transmitting the TOP control signals (16) and BOT control signals (17), wherein the safety logic module (20) is designed to block a transmission of the TOP and BOT control signals (16, 17) based on the fault signal (28) if at least one primary-side operating voltage deviates from the setpoint value.

4. Converter (1) according to one of Claims 1 to 3, in which the checking member (29) comprises a window comparator for each primary-side operating voltage, said window comparator being able to be used to check whether the primary-side operating voltage is within a prescribable setpoint value range.

5. Converter (1) according to one of Claims 1 to 4, in which voltage outputs (49', 50') of the DC/DC converter (27) for providing the secondary-side operating voltage are electrically connected to voltage outputs (49, 50) of the secondary-side supply device (43) for supplying the secondary-side operating voltage with the interposition of a diode (54) that blocks a flow of current in the direction towards the DC/DC converter (27).

6. Converter (1) according to one of Claims 1 to 5, in which the BOT driver circuit (22) comprises an OR gate (41) for each BOT switch (9), said OR gate serving to control an output stage (34) for the purpose of generating a control voltage for the BOT switch (9), wherein the BOT control signals (17) are applied as first input signal and the BOT driver signal (42) is applied as second input signal to the OR gate (41).

7. Converter (1) according to one of Claims 1 to 6, in which the control logic module (26) is connected to an analogue-to-digital converter (48) connected to the intermediate circuit voltage, wherein an output signal of the analogue-to-digital converter (48) based on the equivalent voltage is applied to the control logic module (26).

8. Converter (1) according to one of Claims 1 to 7, in which the control logic module (26) is configured such that the BOT switches (9) are switched on after expiration of a prescribable delay time after the TOP switches (8) are switched off.

9. Converter (1) according to one of Claims 1 to 8, in which the control logic module (26) is configured such that the BOT switches (9) are switched on by the BOT driver signal (42) only above a prescribable upper limit value for the intermediate circuit voltage and/or the BOT switches (9) that are switched on by the BOT driver signal (42) are switched off by the BOT driver signal (42) below a prescribable lower limit value for the intermediate circuit voltage.

10. Synchronous machine with permanent-magnet field excitation, which comprises a converter (1) according to one of Claims 1 to 9 for supplying power using a polyphase operating voltage.

11. Method for operating a converter (1) having an intermediate voltage circuit for providing an intermediate circuit voltage, to which intermediate voltage circuit a plurality of half-bridges (3) having TOP and BOT switches (8, 9) is connected, and having a control circuit (11) for the power switches (8, 9), which control circuit is divided into a primary-side circuit part (12) and a secondary-side circuit part (13), wherein the secondary-side circuit part (13) comprises a TOP driver circuit (21) for controlling the TOP switches (8) and a BOT driver circuit (22) for controlling the BOT switches (9), said method having the following steps:
- generation of one or more primary-side operating voltages for supplying voltage to the primary-side circuit part (12),
- checking for the presence of predeterminable setpoint values of the primary-side operating voltages and generation of a fault signal (28),
- generation of a BOT driver signal (42) based on the fault signal (28) by a secondary-side supplementary circuit (25) and switching-on of all the BOT switches (9) by the BOT driver signal (42) if at least one primary-side operating voltage deviates from the setpoint value,
- generation of at least one secondary-side operating voltage for supplying power to the BOT driver circuit (22) and the supplementary circuit (25),
- conversion of the intermediate circuit voltage to an equivalent voltage for supplying voltage to the BOT driver circuit (22) and the supplementary circuit (25) in the event of failure of the secondary-side operating voltage.

12. Method according to Claim 11, in which an equivalent voltage that is lower than the secondary-side operating voltage is generated.

13. Method according to Claim 12, in which a transmission of TOP control signals (16) to the TOP driver circuit (21) and BOT control signals (17) to the BOT driver circuit (22) is blocked if at least one primary-side operating voltage deviates from the setpoint value.

14. Method according to one of Claims 11 to 13, in which the BOT switches (9) are switched on after expiration of a prescribable delay time after the TOP switches (8) are switched off.

15. Method according to one of Claims 11 to 14, in which the BOT switches (9) are switched on only above a prescribable upper limit value for the intermediate voltage of the intermediate voltage circuit and/or the BOT switches (9) that are switched on are switched off by the BOT driver signal (42) below a prescribable lower limit value for the intermediate voltage of the intermediate voltage circuit.

## Revendications

1. Convertisseur de courant (1) comprenant un circuit intermédiaire de tension (6) destiné à délivrer une tension de circuit intermédiaire (DC+, DC-), auquel sont raccordés une pluralité de demi-ponts (3) comportant des commutateurs TOP et BOT (8, 9), et un circuit de commande (11) destiné à commander les commutateurs de puissance (8, 9), lequel est divisé en une partie de circuit côté primaire (12) et une partie de circuit côté secondaire (13),
la partie de circuit côté primaire (12) comportant :
- un dispositif d'alimentation côté primaire (30) destiné à générer une ou plusieurs tensions de service côté primaire pour l'alimentation de la partie de circuit côté primaire (12),
- un élément de contrôle (29) destiné à contrôler la présence de valeurs de consigne pouvant être prédéfinies des tensions de service côté primaire et délivrer un signal de défaut (28),
la partie de circuit côté secondaire (13) comportant :
- un circuit d'attaque TOP (21) commandable par des signaux de commande TOP (16) et servant à commander le commutateur TOP (8),
- un circuit d'attaque BOT (22) commandable par des signaux de commande BOT (17) et servant à commander le commutateur BOT (9),
- un circuit supplémentaire (25) comprenant un composant logique de commande (26) raccordé au circuit d'attaque BOT (22), lequel est configuré pour délivrer un signal d'attaque BOT (42) sur la base du signal de défaut (28), une mise en circuit de tous les commutateurs BOT (9) ayant lieu dans le cas où au moins une tension de service côté primaire est différente de la valeur de consigne,
- un dispositif d'alimentation côté secondaire (43) destiné à générer au moins une tension de service côté secondaire pour l'alimentation du circuit d'attaque BOT (22) et du circuit supplémentaire (25),
- un convertisseur CC/CC (27) destiné à convertir la tension de circuit intermédiaire en une tension de substitution côté secondaire pour l'alimentation du circuit d'attaque BOT (22) et du circuit supplémentaire (25) en cas de panne de la tension d'alimentation côté secondaire.

2. Convertisseur de courant (1) selon la revendication 1, avec lequel le convertisseur CC/CC (27) est configuré pour générer une tension de substitution qui est inférieure à la tension de service côté secondaire.

3. Convertisseur de courant (1) selon la revendication 1 ou 2, avec lequel la partie de circuit côté primaire (12) comprend un composant logique de sécurité (20) raccordé à l'élément de contrôle (29) pour retransmettre les signaux de commande TOP (16) et les signaux de commande BOT (17), le composant logique de sécurité (20) étant configuré pou bloquer une retransmission des signaux de commande TOP et BOT (16, 17) dans le cas où au moins une tension de service côté primaire est différente de la valeur de consigne.

4. Convertisseur de courant (1) selon l'une des revendications 1 à 3, avec lequel l'élément de contrôle (29) comporte un comparateur à fenêtre pour chaque tension de service côté primaire, lequel permet de contrôler si la tension de service côté primaire se trouve à l'intérieur d'une plage de valeurs de consigne pouvant être prédéfinie.

5. Convertisseur de courant (1) selon l'une des revendications 1 à 4, avec lequel les sorties de tension (49', 50') du convertisseur CC/CC (27) servant à délivrer la tension de service côté secondaire sont reliées électriquement aux sorties de tension (49, 50) du dispositif d'alimentation côté secondaire (43) servant à délivrer la tension de service côté secondaire en interconnectant une diode (54) qui bloque un flux de courant dans la direction vers le convertisseur CC/CC (27).

6. Convertisseur de courant (1) selon l'une des revendications 1 à 5, avec lequel le circuit d'attaque BOT (22) comprend une porte logique OU (41) pour chaque commutateur BOT (9), laquelle sert à commander un étage final (34) servant à générer une tension de commande pour le commutateur BOT (9), les signaux de commande BOT (17) étant appliqués à la porte logique OU (41) en tant que premier signal d'entrée et le signal d'attaque BOT (42) en tant que deuxième signal d'entrée.

7. Convertisseur de courant (1) selon l'une des revendications 1 à 6, avec lequel le composant logique de commande (26) est relié à un convertisseur analogique/numérique (48) raccordé à la tension de circuit intermédiaire, un signal de sortie du convertisseur analogique/numérique (48) qui se base sur la tension de substitution étant appliqué au composant logique de commande (26).

8. Convertisseur de courant (1) selon l'une des revendications 1 à 7, avec lequel le composant logique de commande (26) est conçu de telle sorte qu'une mise en circuit des commutateurs BOT (9) s'effectue après écoulement d'un temps de retard pouvant être prédéfini après la mise hors circuit des commutateurs TOP (8).

9. Convertisseur de courant (1) selon l'une des revendications 1 à 8, avec lequel le composant logique de commande (26) est conçu de telle sorte qu'une mise en circuit des commutateurs BOT (9) par le signal d'attaque BOT (42) ne s'effectue qu'au-dessus d'une valeur limite supérieure pouvant être prédéfinie pour la tension de circuit intermédiaire et/ou les commutateurs BOT (9), mis en circuit par le signal d'attaque BOT (42), sont mis hors circuit par le signal d'attaque BOT (42) au-dessous d'une valeur limite inférieure pouvant être prédéfinie pour la tension de circuit intermédiaire.

10. Machine synchrone avec excitation de champ par magnétisation permanente, laquelle comprend un convertisseur de courant (1) selon l'une des revendications 1 à 9 servant à l'alimentation avec une tension de service polyphasée.

11. Procédé pour faire fonctionner un convertisseur de courant (1) comprenant un circuit intermédiaire de tension destiné à délivrer une tension de circuit intermédiaire, auquel sont raccordés une pluralité de demi-ponts (3) parallèles comportant des commutateurs TOP et BOT (8, 9), et un circuit de commande (11) pour les commutateurs de puissance (8, 9), lequel est divisé en une partie de circuit côté primaire (12) et une partie de circuit côté secondaire (13), la partie de circuit côté secondaire (13) comportant un circuit d'attaque TOP (21) servant à commander le commutateur TOP (8) et un circuit d'attaque BOT (22) servant à commander le commutateur BOT (9), comprenant les étapes suivantes :
- génération d'une ou plusieurs tensions de service côté primaire pour l'alimentation électrique de la partie de circuit côté primaire (12),
- contrôle de la présence de valeurs de consigne pouvant être prédéfinies des tensions de service côté primaire et génération d'un signal de défaut (28),
- génération d'un signal d'attaque BOT (42) sur la base du signal de défaut (28) par un circuit supplémentaire (25) côté secondaire et mise en circuit de tous les commutateurs BOT (9) par le signal d'attaque BOT (42) dans le cas où au moins une tension de service côté primaire est différente de la valeur de consigne,
- génération d'au moins une tension de service côté secondaire pour l'alimentation du circuit d'attaque BOT (22) et du circuit supplémentaire (25),
- conversion de la tension de circuit intermédiaire en une tension de substitution côté secondaire pour l'alimentation électrique du circuit d'attaque BOT (22) et du circuit supplémentaire (25) en cas de panne de la tension d'alimentation côté secondaire.

12. Procédé selon la revendication 11, avec lequel est générée une tension de substitution qui est inférieure à la tension de service côté secondaire.

13. Procédé selon la revendication 12, avec lequel une retransmission des signaux de commande TOP (16) vers le circuit d'attaque TOP (21) et des signaux de commande BOT (17) vers le circuit d'attaque BOT (22) est bloquée dans le cas où au moins une tension de service côté primaire est différente de la valeur de consigne.

14. Procédé selon l'une des revendications 11 à 13, avec lequel les commutateurs BOT (9) sont mis en circuit après écoulement d'un temps de retard pouvant être prédéfini après la mise hors circuit des commutateurs TOP (8).

15. Procédé selon l'une des revendications 11 à 13, avec lequel les commutateurs BOT (9) ne sont mis en circuit qu'au-dessus d'une valeur limite supérieure pouvant être prédéfinie pour la tension intermédiaire du circuit intermédiaire de tension et/ou les commutateurs BOT (9) sont mis hors circuit par le signal d'attaque BOT (42) au-dessous d'une valeur limite inférieure pouvant être prédéfinie pour la tension intermédiaire du circuit intermédiaire de tension.
